# EUROPÄISCHE PATENTANMELDUNG

(11) **EP 3 808 538 A1**
(43) Veröffentlichungstag der Anmeldung: **21.04.2021**
(21) Anmeldenummer: 20196743.7
(22) Anmeldetag: 17.09.2020
(51) Int. Cl.: B29C 63/00, B29C 63/02

(54) **VERFAHREN ZUM AUTOMATISIERTEN ENTFERNEN EINER LACKIER-SCHUTZFOLIE VON MINDESTENS EINEM TEIL EINER KAROSSERIE**

(30) Priorität: 16.10.2019 DE 102019215943
(71) Anmelder: tesa SE, 22848 Norderstedt (DE)
(72) Erfinder: Gerdsmann, Thomas, 22529 Hamburg (DE); Himmelsbach, Peter, 21614 Buxtehude (DE); Tuffe, David, 22851 Norderstedt (DE); Zibull, Michael, 25436 Uetersen (DE)
(74) Vertreter: tesa SE

(57) **Zusammenfassung**

Die Erfindung betrifft ein Verfahren zum automatisierten Entfernen einer Lackier-Schutzfolie von mindestens einem Teil einer Karosserie. Dazu wird eine Lackier-Schutzfolie und/oder eins Klebestreifen von einer Karosserie entfernt indem, ein Teil der Lackier-Schutzfolie und/oder des wenigstens einen Klebestreifens mit einer Demaskiervorrichtung verbunden werden, die Demaskiervorrichtung und die Karosserie relativ zueinander entlang eines Verfahrweges bewegt werden, sodass eine Zugkraft auf die Lackier-Schutzfolie und/oder den wenigstens einen Klebestreifen ausgeübt wird, wodurch der wenigstens eine Klebestreifen von der Karosserie abgezogen wird. Die Bewegung wird solange fortgesetzt, bis der wenigstens eine Klebestreifen vollständig von der Karosserie abgezogen ist.

## Beschreibung

Die Erfindung betrifft ein Verfahren zum automatisierten Entfernen einer Lackier-Schutzfolie von mindestens einem Teil einer Karosserie.

Automobil-Karosserien werden zunehmend zweifarbig lackiert. Diese sogenannte "two-tone" Lackierung erfordert es, dass die Karosserie zweimalig eine Lackierstraße durchläuft, um eine erste Farbschicht auf einem ersten Teil der Karosserie, beispielsweise der gesamten Karosserie, aufzutragen und in einem Trocknungsschritt zu trocknen. In einem zweiten Lackiervorgang wird dann eine zweite Farbschicht aufgetragen, beispielsweise nur auf dem Karosseriedach. Damit in dem zweiten Lackiervorgang nur diejenigen Karosserieteile lackiert werden, die dazu vorgesehen sind, werden vor dem zweiten Lackiervorgang diejenigen Karosserieteile, die nicht lackiert werden sollen, mit einer Lackier-Schutzfolie abgedeckt und mit Klebestreifen befestigt. Lackier-Schutzfolien existieren in verschiedenen Ausführungen. So können Folien zugeschnitten und mittels Klebebändern auf der Karosserie befestigt werden, z. B. mit speziellen hochflexiblen Klebebändern wie tesaflex® 4174. Solche Klebebänder sind z. B. aus der DE 10 2004 021 775 A1 bekannt und ermöglichen eine scharfkantige Lackierkante, also einen besonders sauberen Übergang zwischen zwei Lackschichten bzw. eine konturscharfe Lackkante einer einzelnen Lackschicht. Es gibt auch Komplettprodukte für den Lackier-Schutz, bei denen die Schutzfolie bereits mit einem Klebestreifen versehen ist, z. B. tesa® 4185 Roll Masker oder 7140 Roll Masker, und die eine besonders konturscharfe Lackierkante ermöglichen. Die verwendeten Klebebänder lassen sich besonders schonend und ohne Rückstände zu bilden von Lackschichten ablösen. Je nach Komplexität der gewünschten Lackierung, sind ein oder mehrere Lackier-Schutzfolien erforderlich, die durch einen oder mehrere Klebestreifen an der Oberfläche der Karosserie befestigt werden.

Ist der zweite Lackiervorgang abgeschlossen und die zweite Farbschicht auf der Karosserie aufgetragen, werden die Lackier-Schutzfolie(n) einschließlich Klebebänder händisch von einem oder mehreren Werkern entfernt. Sofern Karosserien mit einem Naßdemaskierverfahren beschichtet werden, können Werker Lösemitteldämpfen und Aerosolen ausgesetzt sein. Aber auch wenn der Lack einer lackierte Karosserie erst in einen Trocknungsofen getrocknet wird, bestehen durch die aufgeheizte Karosserie eine Verletzungsrisiko und durch möglich austretende Dämpfe. In jedem Fall erfordert diese manuelle Arbeit umfassende Arbeitsschutzmaßnahmen wie das Tragen von Handschuhen, Schutzbrillen und Atemschutzgeräten oder Überdruckanzügen bzw. Druckluftschutzanzügen wodurch diese Tätigkeiten somit körperlich belastend sind, da die freie Atmung und die Bewegungsfreiheit der Werker beeinträchtigt werden.

Zudem erfordert das Entfernen der Lackier-Schutzfolie, welches auch Demaskieren genannt wird, ein kontrolliertes und gleichmäßiges Abziehen der Klebestreifen, wobei gleichzeitig die Lackier-Schutzfolie zusammengelegt werden muss. Durch unsachgemäßes Entfernen der Lackier-Schutzfolie durch einen Werker kann zudem die lackierte Karosserie durch Berührung mit der lackierten Seite der Lackier-Schutzfolie zur Verschmutzung der Karosserie führen, wodurch diese Karosserie zum Produktionsausschuss wird. Es können aber auch Farbkanten entstehen, die nicht die Qualitätsstandards des Herstellungsprozesses erfüllen und aufwendig nachgearbeitet und korrigiert werden müssen, sofern dies möglich ist. Dies passiert insbesondere dann, wenn Werker den Klebestreifen zu schnell oder zu kräftig abziehen, sodass dieser reißt oder unter ungünstigen Abzieh-Winkeln von der Karosserie abziehen, sodass es zu Unterlaufungen oder es mit dieser in Kontakt kommt. Durch zu kräftiges Abziehen kann sogar der Lack beschädigt werden und es können Ablösungen bis hin zu Abplatzungen der Lackschicht auftreten.

Während es zudem bereits Lösungen zum automatisierten, serienmäßigen Applizieren von Klebestreifen bekannt sind, wie z. B. aus der EP 1301427 A2, sind automatisierte Lösungen zum Entfernen vom Lackier-Schutzfolien und/oder Klebestreifen kaum üblich, da das Entfernen der mit Lack verschmutzten Folie besonders schwierig und komplex ist. Insbesondere besteht immer das Problem, dass die Karosserie nicht verschmutzt werden darf, aber in einem automatisierten Prozess die großflächige Folie die zudem an verschiedenste, bisweilen komplexe Geometrien der Karosserie angepasst ist, nur schwierig zu automatisieren ist.

Es ist somit Aufgabe der vorliegenden Erfindung die vorgenannten Nachteile zu verringern oder zu überwinden.

Die Erfindung löst diese Aufgabe durch ein Verfahren zum automatisierten Entfernen einer Lackier-Schutzfolie von mindestens einem Teil einer Oberfläche einer Karosserie gemäß dem Gegenstand von Anspruch 1.

Eine Lackier-Schutzfolie ist eine Schutzfolie, die eine Karosserie, insbesondere eine Autokarosserie vor einer Lackierschicht und vor Farbnebeln schützt. Diese Folien sind in der Regel reißfest und wasserundurchlässig und lösemittelbeständig. Sie bestehen häufig aus Kunststoffen wie PP, PE, LDPE, oder PET können aber auch aus beschichteten Papier- oder Stoffbahnen bestehen. Eine Lackier-Schutzfolie deckt dabei wenigstens einen Teil einer Oberfläche einer Karosserie ab und schützt diese vor einer Lackierung sowie vor Farbnebeln. Dabei kann wie eingangs bereits beschrieben, die Lackierschutzfolie aus einer einfachen Folie bestehen, die mit wenigstens einem Klebestreifen an der Karosserie befestigt ist. Dies kann beispielsweise der Fall sein, wenn die Seiten einer Fahrzeugkarosserie zweifarbig lackiert werden soll. Dann wird nach dem Auftragen einer Grundlackierung in einer ersten Farbe und nachdem die Lackierung ausreichend getrocknet ist, eine Folie entlang der Seite mittels wenigstens eines Klebestreifens oder Klebestreifenabschnitts fixiert. Ein Klebestreifen wird dabei teilweise auf die dann bereits lackierte Karosserie geklebt und teilweise auf die Lackier-Schutzfolie. In diesem Fall werden Klebestreifen und Lackier-Schutzfolie also erst kurz vor der Applikation oder bei der Applikation auf die Karosserie zusammengebracht. Wird ein spezielles Maskierungsprodukt, wie z. B. tesa Roll Masker verwendet, sind Lackier-Schutzfolie und Klebestreifen bereits miteinander verbunden und bilden eine Einheit. In diesem Fall muss zum Maskieren nur die Klebefläche der speziellen Lackier-Schutzfolie an die entsprechende Position auf der Karosserie geklebt werden, um die Lackierkante zu definieren. Die Zuschnitte der Lackier-Schutzfolie sind dabei im Wesentlichen rechteckig, können aber auch an die Geometrie der Karosserie angepasste Schnittformen aufweisen. Unabhängig von der Formgebung des Zuschnitts wird oder ist stets an einer Schnittkante der Lackierschutzfolie ein Klebestreifen mit der Lackier-Schutzfolie verbunden, so dass der Klebestreifen nur teilweise auf die Lackier-Schutzfolie aufgeklebt wird und ein anderer Teil des Klebebestreifens über die Lackierschutzfolie übersteht. Dieser überstehende Teil des Klebestreifens wird dann an der Karosserie befestigt und dient einerseits dem Fixieren der Lackier-Schutzfolie und andererseits wird durch den Klebestreifen auf der Karosserie die Lackierkante gebildet. An Karosserieteilen, an denen die Anforderungen an die konturschärfe der Lackkante besonders hoch sind, werden zusätzliche spezielle Klebestreifen eingesetzt. Diese speziellen Klebestreifen werden auch Fineline-Tape genannt und bestehen häufig aus weichem und anschmiegsamem und flexiblem Material wie, z. B. PVC oder Weich-PVC oder speziellen Papieren, z. B. Washi Papier. Diese Fineline-Tapes werden entweder abschnittsweise direkt auf die betreffenden Karosserieteile aufgeklebt und eine Lackier-Schutzfolie wird dann auf das Fineline-Tape aufgeklebt. Oder ein Fineline-Tape wird auf einen Klebestreifen einer bereits auf eine Karosserie aufgeklebten Lackier-Schutzfolie aufgeklebt, so dass das Fineline-Tape über den Klebestreifen der Lackier-Schutzfolie übersteht und die Lackkante bildet.

Um die Lackier-Schutzfolie nach einem Lackiervorgang automatisiert zu entfernen, wird nach einem Lackiervorgang vorzugsweise das mit der Lackier-Schutzfolie und der Karosserie verbundene Klebestreifen an einem Ende von der Karosserie abgelöst. Es wird dabei so abgelöst, dass es in der Längsrichtung des Klebestreifens abgezogen werden könnte. Mit anderen Worten wird der Klebestreifen an einer seiner Schnittenden abgelöst, die im Wesentlichen senkrecht zur Längsrichtung des Klebestreifens verlaufen. In einem weiteren Schritt wird dieses Ende des Klebestreifens dann mit einer Demaskiervorrichtung verbunden. Das Ablösen und/oder Verbinden kann beispielsweise händisch erfolgen. Es kann aber auch automatisiert erfolgen. Alternativ kann auch die Lackier-Schutzfolie mit der Demaskiervorrichtung verbunden werden. Dies kann ebenfalls händisch oder automatisiert erfolgen.

Die Demaskiervorrichtung ist dann dazu ausgebildet, den Klebestreifen abzuziehen. Dies erfolgt dadurch, dass die Demaskiervorrichtung relativ zur Karosse entlang eines Verfahrweges bewegt wird. Die relative Bewegung wird derart ausgeführt, dass eine Zugkraft auf den noch auf der Karosserie klebenden Klebestreifen ausgeübt wird. In Folge der wirkenden Zugkraft löst sich der Klebestreifen von der Oberfläche der Karosserie ab (adhäsiver Bruch). Die Klebeverbindung zwischen Lackier-Schutzfolie und Klebestreifen bleibt durch die wirkende Zugkraft erhalten, der Klebestreifen wird also nicht von der Lackier-Schutzfolie abgelöst. Die relative Bewegung kann eine translatorische Bewegung, eine Rotationsbewegung oder eine Kombination aus beiden Bewegungsformen sein. In einer Variante wird die Lackier-Schutzfolie mit der Demaskiervorrichtung verbunden und die Zugkraft wirkt über die Lackier-Schutzfolie auf den Klebestreifen. In Folge der auf die Lackier-Schutzfolie wirkenden Zugkraft löst sich der Klebestreifen von der Oberfläche der Karosserie ab. Auch in dieser Variante bleibt die Klebeverbindung zwischen Lackier-Schutzfolie und Klebestreifen trotz der einwirkenden Zugkraft erhalten, der Klebestreifen wird also nicht von der Lackier-Schutzfolie abgelöst.

Die Zugkraft ist so bemessen, dass sie größer ist als Adhäsionskraft zwischen Klebestreifen und Oberfläche der Karosserie. Somit löst sich der Klebestreifen von der Oberfläche der Karosserie ab. Zugleich ist sie kleiner als die Kohäsionskraft der Lackier-Schutzfolie und/oder der Kohäsionskraft des Klebestreifens. Durch die wirkende Zugkraft reißt die Lackier-Schutzfolie und/oder der Klebestreifen daher nicht. Bevorzugt liegt die Zugkraft, die auf die Lackier-Schutzfolie und/oder den wenigstens einen Klebestreifen ausgeübt wird, in einem Bereich zwischen 1 N/cm und 12 N/cm, bevorzugt zwischen 2 N/cm bis 4 N/cm. Bei der hier genannten Zugkraft handelt es sich um eine auf die Breite des Klebestreifens bezogene spezifische Zugkraft. Die Breite beträgt dabei 1 cm. Die Zugkraft kann auch durch eine Rotationsbewegung eines Wickelhilfsmittels oder eines Greifhilfsmittels erzeugt werden und/oder durch die relative Bewegung der Demaskiervorrichtung und der Karosserie zueinander erzeugt werden. Wenn die Zugkraft durch eine Rotationsbewegung eines Wickelhilfsmittels oder eines Greifhilfsmittels erzeugt wird, kann auch das Drehmoment oder eine dem Drehmoment proportionale physikalische Größe, verwendet werden, um die Zugkraft, die auf die Lackier-Schutzfolie und/oder den Klebestreifen wirkt zu ermitteln.

Abhängig von der Geometrie der Karosserie wird die Lackier-Schutzfolie mit wenigstens einem Klebestreifen auf der Oberfläche der Karosserie oder der bereits lackierten Oberfläche der Karosserie verbunden. Selbstverständlich kann die Lackier-Schutzfolie auch durch mehrere Klebestreifen an der Karosserie befestigt werden. Beispielsweise kann eine durchgängige Lackier-Schutzfolie durch einen ersten Klebestreifenabschnitt an einem Kotflügel aufgeklebt werden, durch einen zweiten Klebestreifenabschnitt kann die Lackier-Schutzfolie entlang eines Dachholms befestigt werden und schließlich durch einen dritten Klebebadabschnitt kann sie entlang einer Kofferraumtür aufgeklebt werden.

Die Demaskiervorrichtung weist wenigstens eine Aufnahme für die Lackier-Schutzfolie und/oder wenigstens einen Klebestreifen auf. Im einfachsten Fall kann die Demaskiervorrichtung im Wesentlichen durch eine Aufnahmevorrichtung gebildet sein, die verfahrbar ist oder an einem Endeffektor eines Roboters, beispielsweise eines mehrachsigen Industrieroboters, befestigt ist. Die Demaskiervorrichtung kann aber auch ein komplexes elektromechanisches System sein, welches über Kraftsensoren und/oder Drehmomentsensoren, die auf die Lackier-Schutzfolie wirkende Zugkraft ermittelt, eine Sensorik zum Erkennen der Verbindung der Lackier-Schutzfolie und/oder des Klebestreifens. Insbesondere kann die Demaskiervorrichtung auch elektrisch oder pneumatisch betätigte Aktoren zum Fixieren der Lackier-Schutzfolie und/oder des Klebestreifens an der Demaskiervorrichtung aufweisen.

Es ist in besonderes bevorzugt, dass die Demaskiervorrichtung an einem Roboter befestigt ist. Dieser Roboter ist vorzugsweise ein mehrachsiger Industrieroboter. Derartige Industrieroboter sind sehr häufig in der Automobilfertigung in Fertigungsstraßen und Lackierstraßen eingesetzt. Diese sind beispielsweise hinreichend bekannt aus EP0511977B1 und sollen hier nicht weiter beschrieben werden.

Die Demaskiervorrichtung kann aber auch eine Vorrichtung sein, die oberhalb einer Karosserie angeordnet ist. Beispielsweise kann sie über eine Aufnahmestange verfügen, mit der die Lackierschutzfolie und/oder der wenigstens ein Klebestreifen mit der Demaskiervorrichtung verbunden wird. Die Demaskiervorrichtung kann ortsfest oder aber beweglich montiert sein. Wesentlich ist, dass eine Bewegung relativ zwischen Demaskiervorrichtung und Karosserie erfolgt.

Die Vorteile des automatisierten Demaskierens durch eine Demaskiervorrichtung liegen darin, dass ein unsachgemäßes Demaskieren durch Werker vermieden werden kann und ein gleichbleibender Prozess gewährleistet ist.

Das Verfahren kann vorteilhaft weitergebildet werden, indem in Schritt b) die Lackier-Schutzfolie und/oder der wenigstens eine Klebestreifen durch die Demaskiervorrichtung aufgewickelt wird, und die Demaskiervorrichtung dazu ausgebildet ist, die Lackier-Schutzfolie und/oder den wenigstens einen Klebestreifen aufzuwickeln, sodass die Lackier-Schutzfolie und/oder der wenigstens eine Klebestreifen eine Rolle bilden. Sobald die Lackier-Schutzfolie und/oder den wenigstens eine Klebestreifen von der Oberfläche der Karosserie abgelöst ist, kann diese/r durch die Demaskiervorrichtung aufgewickelt werden. Dadurch, dass das abgezogene Material (Lackier-Schutzfolie und/oder Klebestreifen) direkt aufgewickelt wird, kann die Demaskiervorrichtung, beispielsweise durch einen Industrieroboter, in der Nähe der Oberfläche der Karosserie verfahren werden. Durch das Aufwickeln bildet das Material eine Rolle in Form einer archimedischen Spirale. Es kann besonders bevorzugt sein, dass die Demaskiervorrichtung in unmittelbaren Abstand zur Oberfläche der Karosserie verfahren wird, wobei die Demaskiervorrichtung direkt über dem Klebestreifen oder in dessen Nähe geführt wird und diesen nach dem Ablösen aufwickelt. Unter unmittelbarem Abstand soll hier ein Abstand im Bereich von Zentimetern verstanden werden. Vorzugsweise wird die Demaskiervorrichtung mit einem Abstand zwischen 2 cm und 100 cm entlang der Oberfläche der Karosserie geführt. Es ist besonders bevorzugt, dass der Abstand 2 cm bis 20 cm beträgt. Der Vorteil liegt darin, dass durch einen geringen Abstand der Demaskiervorrichtung zur Karosserie, wird die Länge der Lackier-Schutzfolie und/oder des Klebestreifens die frei schwingen kann verringert, wodurch vermieden werden kann, dass durch Schwingungen der Lackier-Schutzfolie und/oder des Klebestreifens darauf befindlicher aufgetragener Lack auf die lackierte Karosserie geschleudert wird. Dies ist besonders vorteilhaft, wenn eine Nassdemaskierung erfolgt, der aufgetragene Lack beim Demaskieren also noch feucht ist und noch nicht abgetrocknet oder ausgehärtet ist. Ein weiterer Vorteil, der durch ein Aufwickeln des Materials resultiert, ist, dass durch die Nähe zur Oberfläche der Karosserie der erforderliche Raum zum Demaskieren stark reduziert wird, da nicht die gesamte Lackier-Schutzfolie und /oder der Klebestreifen gradlinig abgezogen wird, sondern platzsparend aufgewickelt wird. Ein weiterer Vorteil besteht darin, dass das aufgewickelte Material einfacher gehandhabt werden kann und die entstehende Rolle, als Ganzes einer Wiederverwertung bzw. Entsorgung zugeführt werden kann. Dadurch kann vermieden werden, dass die Lackier-Schutzfolie vorsichtig zusammengelegt werden muss oder zu einem Knäul geformt werden muss. In diesen Fällen besteht mit den herkömmlichen Verfahren stets das Risiko, dass nicht abgetrockneter oder ausgehärteter Lack versehentlich auf die Karosserie gelangt.

Das Verfahren kann vorteilhaft weitergebildet werden, indem in Schritt a) die Lackier-Schutzfolie und/oder der wenigstens eine Klebestreifen mit einem Wickelhilfsmittel verbunden wird und das Wickelhilfsmittel mit der Demaskiervorrichtung in Verbindung steht oder mit der Demaskiervorrichtung lösbar verbunden wird.

Im einfachsten Fall ist das Wickelhilfsmittel eine Welle, an der ein Ende der Lackier-Schutzfolie und/oder des Klebstreifens befestigt wird. Dies kann durch die verbleibende Klebkraft des abgezogenen Klebestreifens erfolgen oder es kann ein zusätzlicher Fixierklebestreifen verwendet werden, mit dem die Lackier-Schutzfolie und/oder der Klebestreifen an dem Wickelhilfsmittel befestigt wird. Es kann auch bevorzugt sein, dass das Befestigen durch eine Klemmvorrichtung erfolgt, beispielsweise einer Klammer oder einer Spange, oder eine Befestigungslasche oder Befestigungsöffnung an oder in dem Wickelhilfsmittel. Vorzugsweise wird das abgelöste Ende des Klebestreifens an dem Wickelhilfsmittel befestigt.

Zudem kann es bevorzugt sein, dass die Demaskiervorrichtung eine Aufnahmevorrichtung für ein Wickelhilfsmittel aufweist. In diesem Fall kann unter einem Wickelhilfsmittel ein Rollenkern, wie er beispielsweise als Kernmaterial bei Klebebändern genutzt wird, oder eine einfacher Papp- oder Kunststoffzylinder verstanden werden. Die Form des Wickelhilfsmittels ist vorzugsweise zylindrisch, kann aber auch andere Formen aufweisen. Beispielsweise kann das Wickelhilfsmittel ein viereckiger, fünfeckiger oder sechseckiger Kern sein. Auch ein Wickelhilfsmittel mit einer vieleckigen Grundform ist geeignet. Die Aufnahmevorrichtung der Demaskiervorrichtung ist an die Formgebung des Wickelhilfsmittels angepasst und entsprechend ausgebildet, um solch einen eckiges Wickelhilfsmittel aufzunehmen. Der Vorteil besteht darin, dass durch die nicht rotationssymmetrische Formgebung des Wickelhilfsmittels, die Aufnahmevorrichtung in das Wickelhilfsmittel eingreifen kann oder das Wickelhilfsmittel in die Aufnahmevorrichtung eingesetzt werden kann und ein Drehmoment besonders gut von der Demaskiervorrichtung auf das Wickelhilfsmittel übertragen werden kann (formschlüssige Verbindung). Zudem hat eine eckige Ausgestaltung des Wickelhilfsmittels den Vorteil, dass eine aufgewickelte Lackier-Schutzfolie nicht so leicht von dem Wickelhilfsmittel herunterrutscht, beispielsweise wenn das Wickelhilfsmittel aus der Demaskiervorrichtung entfernt wird. Dadurch wird die Handhabung verbessert bzw. wird ein automatisierter Prozess zuverlässiger.

Dieses Wickelhilfsmittel wird durch einen Werker oder Roboter mit der Aufnahmevorrichtung der Demaskiervorrichtung verbunden, beispielsweise aufgesetzt. Die vorgenannten Befestigungsmöglichkeiten sind hier ebenso anwendbar. Alternativ kann die Lackier-Schutzfolie und/oder der Klebestreifen auch erst an dem Wickelhilfsmittel befestigt werden, gefolgt von dem Schritt, dass das Wickelhilfsmittel dann mit der Demaskiervorrichtung verbunden wird.

Das Wickelhilfsmittel hat vorzugsweise einen Durchmesser von einigen Zentimetern, vorzugsweise zwischen 2 cm und 25 cm. Dadurch kann das Material zuverlässig und reproduzierbar auf das Wickelhilfsmittel aufgewickelt werden. Kleinere Außendurchmesser erschweren das anfängliche Aufwickeln und verringern die Prozessstabilität, während bei zu großen Außendurchmessern der Wickelhilfe die Kraft pro Fläche, die zwischen den Lagen wirkt, zu gering sein kann und die Rolle keine ausreichend feste Wicklung aufweist. Dadurch kann beim Entfernen der Wickelhilfe aus der Demaskiervorrichtung, die Wicklung zerfallen oder von der Wickelhilfe herunterrutschen. Die Demaskiervorrichtung ist dazu ausgebildet, das Wickelhilfsmittel zu rotieren, wodurch das Material dann aufgewickelt wird. Gleichzeitig wird die Demaskiervorrichtung entlang der Oberfläche der Karosserie verfahren und die Lackier-Schutzfolie und/oder der Klebestreifen abgezogen. Die Länge des Wickelhilfsmittels beträgt vorteilhafterweise zwischen 2 cm bis zu 100 cm. Wenn die Demaskiervorrichtung oberhalb der Karosserie angebracht ist, kann es vorteilhat sein, dass das Wickelhilfsmittel eine Länge von bis zu 350 cm aufweist.

Die Vorteile der Verwendung eines Wickelhilfsmittels liegen darin, dass dadurch die Prozessstabilität verbessert werden kann, da die Wicklung mit definierten Parametern erfolgen kann. Zudem erleichtert sich die Verwendung eines Wickelhilfsmittels die Entsorgung, da das Material zu einer Rolle bzw. einem länglichen Wickel geformt wird, der durch Werker oder einen Roboter besonders einfach gehandhabt werden kann.

Das Verfahren kann vorteilhaft weitergebildet werden, indem in Schritt a) die Lackier-Schutzfolie und/oder der wenigstens eine Klebestreifen mit einem Greifhilfsmittel verbunden werden, und das Greifhilfsmittel lösbar mit der Demaskiervorrichtung verbunden wird. Unter einem Greifhilfsmittel ist im Sinne dieser Anmeldung ein Wickelhilfsmittel zu verstehen, welches an einem definierten Ort abgelegt oder platziert ist. Ein Roboter, insbesondere ein Industrieroboter an dem die Demaskiervorrichtung vorzugsweise befestigt ist, kann dieses Greifhilfsmittel dann an einer definierten Position erfassen und zuverlässig automatisiert aufnehmen. Dadurch kann der an sich schwierige Prozess des automatisierten Verbindens der Lackier-Schutzfolie beim Demaskieren zuverlässiger gestaltet werden.

Dieser Schritt kann vorzugsweise bereits vor dem Lackieren erfolgen. Dazu verbindet ein Werker bei der Maskierung der Karosserie ein Ende der Lackier-Schutzfolie und/oder den Klebestreifen mit dem Greifhilfsmittel. Das Greifhilfsmittel kann dann an einer definierten Position auf dem Fahrzeug oder vor dem Fahrzeug abgelegt werden. Vorzugsweise wird das Greifhilfsmittel an einer definierten Position abgelegt. Dies hat auch den Vorteil, dass im Rahmen einer Qualitätssicherung, die stets vor dem Lackieren erfolgt, gleichzeitig schon überprüft werden kann, ob das Greifhilfsmittels korrekt positioniert und ausgerichtet ist.

Besonders bevorzugt ist es, dass das Greifhilfsmittel mit einer Haltevorrichtung verbunden wird, wobei die Haltevorrichtung fest mit einem Trägergestell verbunden ist, auf dem die Karosserie durch die Fertigungs- bzw. Lackierstraße befördert wird. Somit wird sichergestellt, dass das Greifhilfsmittel an einer definierten Position in einer definierten Lage bereitgestellt wird, um es mit der Demaskiervorrichtung zu verbinden.

Alternativ ist es möglich, dass die Lackier-Schutzfolie und/oder der Klebestreifen bereits mit einem Greifhilfsmittel ausgestattet sind und keine weiteren Schritte für das Verbinden mit dem Greifhilfsmittel mehr erforderlich sind. Dies ist eine besonders zeitsparende Ausführung erfordert aber, dass die Lackier-Schutzfolie und/oder der Klebestreifen bereits mit solch einem Greifhilfsmittel ausgerüstet sind.

Ein Greifhilfsmittel kann auch eine Materialschlaufe sein, die aus der Lackier-Schutzfolie und/oder dem Klebestreifen gebildet wird. Die Demaskiervorrichtung erfasst dann die Materialschlaufe und stellt eine Verbindung her, um das Aufwickeln der Lackier-Schutzfolie und/oder des Klebestreifens zu ermöglichen. Dabei wird kein zusätzliches Material benötigt, was Ressourcen schont. Zudem muss die Lackier-Schutzfolie und/oder der Klebestreifen nicht mit einem anderen Material, z. B. einer Papprolle oder einer Kunststoffrolle verbunden werden. Diese Verbindung kann eine Schwachstelle darstellen, wenn sie nicht korrekt erfolgt oder die Klebkraft des Klebestreifens oder des Fixierklebestreifens nicht ausreichend hoch ist. Ein Abreißen ist bei einer Verwendung einer Materialschlaufe nahezu ausgeschlossen.

Das Verfahren kann vorteilhaft weitergebildet werden, indem während des Bewegens von Demaskiervorrichtung und Karosserie relativ zueinander entlang eines Verfahrweges das Wickelhilfsmittel oder das Greifhilfsmittel derart durch die Demaskiervorrichtung rotiert wird, dass diejenige Seite der Lackier-Schutzfolie, die der Karosserie zugewandt ist, nach dem Aufwickeln auf das Wickelhilfsmittel oder dem Greifhilfsmittel eine Außenseite der Rolle bildet. Dadurch, dass die Demaskiervorrichtung in einem Wickelsinn rotiert, der die lackierte Außenseite der Lackier-Schutzfolie und/oder des Klebestreifens in das Innere der Rolle, die durch die archimedische Spirale gebildet wird, wird die Außenseite der Rolle durch die unlackierte Unterseite der Lackier-Schutzfolie bzw. durch die Klebeseite des Klebestreifens, also der Seite, die auf der Karosserie aufliegt bzw. aufgeklebt ist, gebildet. Dadurch kann verhindert werden, dass die Lackier-Schutzfolie mit darauf befindlichem noch nicht abgetrocknetem oder noch nicht ausgehärtetem Lack versehentlich auf die Karosserie gelangt. Auch die Handhabung der entstehenden Rolle kann dadurch verbessert werden, da bei der Entnahme und Entsorgung der Rolle durch einen Werker oder einen Roboter nicht abgetrockneter oder ausgehärteter Lack nicht versehentlich mit dem Werker oder der Produktionsanlage in Kontakt kommen können.

Das Verfahren kann vorteilhaft weitergebildet werden, indem in einem weiteren Schritt die Lackier-Schutzfolie und/oder der wenigstens eine Klebestreifens einer oder die Lackier-Schutzfolie und/oder der wenigstens eine Klebestreifens einschließlich dem Wickelhilfsmittel oder dem Greifhilfsmittel einer Entsorgungseinrichtung zugeführt werden. bei der Entsorgungseinrichtung kann es sich um eine Presse, einen Schredder, der die Lackier-Schutzfolie und/oder den Klebestreifen zerkleinert und platzeffizient sammelt, handeln.

Das Verfahren kann vorteilhaft weitergebildet werden, indem eine Geschwindigkeit, mit der der wenigstens eine Klebestreifen von der Oberfläche der Karosserie abgezogen wird, zwischen 1 m/min bis 30 m/min beträgt. Eine Geschwindigkeit in diesem Bereich hat den Vorteil, dass die Klebeschicht des wenigstens einen Klebestreifens ausreichend Zeit hat, um sich rückstandslos von der Karosserie zu lösen und verhindert zudem, dass, wenn der Klebestreifen auf einen bereits lackierten Teil der Karosserie aufgetragen wird, dieser Teil geschont wird. Zudem ist ein ausreichend schnelles Abziehen sichergestellt, sodass ein Demaskieren innerhalb einer Arbeitsstation bzw. Produktionsstation erfolgt.

Das Verfahren kann vorteilhaft weitergebildet werden, indem eine Relativgeschwindigkeit, mit der die Demaskiervorrichtung und die Karosserie relativ zueinander entlang eines Verfahrweges bewegt werden, zwischen 1 m/min und 5 m/min beträgt, besonders bevorzugt 1,5 m/min bis 3 m/min beträgt. Dies ist besonders vorteilhaft, da der Arbeitstakt in Fertigungs- bzw. Lackierstraßen in diesem Bereich liegt. Das Verfahren ist somit mit dem Produktionstakt gekoppelt. Zudem wird durch eine Begrenzung der Relativgeschwindigkeit ein kollaboratives Arbeiten zwischen Werkern und einem Roboter, der mit der Demaskiervorrichtung ausgestattet ist, ermöglicht, da die relativen Geschwindigkeiten begrenzt sind und bei einer Kollision der Demaskiervorrichtung oder des Roboters mit einem Werker nur eine begrenzte kinetische Energie auf einen Werker einwirkt.

Das Verfahren kann vorteilhaft weitergebildet werden, indem die Demaskiervorrichtung und die Karosserie derart relativ zueinander bewegt werden, dass die Lackier-Schutzfolie ausgehend von der Front der Karosserie von der Karosserie entfernt wird. In Fertigungsstraßen und Lackierstraßen werden die Karosserien in der Regel mit der Front voran befördert und bearbeitet.

Das Verfahren kann vorteilhaft weitergebildet werden, indem der wenigstens eine Klebestreifen unter einem Winkel α von 1° bis 179° von der Karosserie abgezogen wird, besonders bevorzugt unter einem Winkel zwischen 1° und 90° von der Karosserie abgezogen wird, wobei der Winkel α zwischen der Oberfläche der Karosserie und dem von der Karosserie abgezogenen Teil des Klebestreifens eingeschlossen wird. Wird der Klebestreifen unter einem Winkel α zwischen 1° und 90° von der Oberfläche der Karosserie abgezogen hat dies den Vorteil, dass vermieden wird, dass der Haftgleiteffekt (engl. stick-slip-effect) den bereits abgezogenen Teil des Klebestreifens und die damit verbundene Folie in Schwingung versetzt, wodurch noch nicht abgetrockneter oder ausgehärteter Lack, auf der Folie und/oder dem Klebestreifen sich hiervon ablösen und die lackierten Oberflächen der Karosserie verschmutzen. Es wird auch vermieden, dass die Folie in Schwingung versetzt wird und mit der Oberfläche der Karosserie in Kontakt gerät. Dies könnte insbesondere in Engstellen wie in Spalten passieren.

Das Verfahren kann vorteilhaft weitergebildet werden, indem der wenigstens eine Klebestreifen unter einem Winkel β von 1° bis 179° von der Karosserie abgezogen wird, besonders bevorzugt unter einem Winkel β zwischen 30° und 45° von der Karosserie abgezogen wird, wobei der Winkel β durch den Teil des Klebestreifen, der auf der Oberfläche der Karosserie aufgeklebt ist und der Projektion des Teils des Klebestreifens, der von der Oberfläche der Karosserie abgelöst ist auf die Oberfläche der Karosserie, eingeschlossen wird. Wird der Klebestreifen unter einem Winkel β zwischen 30° und 45° von der Oberfläche der Karosserie abgezogen hat dies den Vorteil, dass die Lackier-Schutzfolie unmittelbar bei bzw. nach dem Abziehen von der Oberfläche der Karosserie, von eben dieser wegbewegt wird wodurch ein Kontakt der Oberfläche der Karosserie mit dem Klebestreifen oder der Folie verhindert wird.

Das Verfahren kann vorteilhaft weitergebildet werden, indem das im vorangegangenen beschriebene Verfahren jeweils mittels einer ersten Demaskiervorrichtung und mittels einer zweiten Demaskiervorrichtung durchgeführt wird, wobei die erste Demaskiervorrichtung an einer ersten Seite der Karosserie (links) angeordnet ist und die zweite Demaskiervorrichtung auf einer zweiten Seite der Karosserie (rechts) angeordnet ist. Diese Anordnung ermöglichte ein simultanes Demaskieren einer maskierten Karosserie auf einer Fahrerseite (links) und einer Beifahrerseite (rechts). Dadurch können Lackier-Schutzfolien besonders einfach von Front, Kotflügen, Türseiten, B-Säule und dem Heck entfernt werden Durch den die Verwendung einer ersten und zweiten Demaskiervorrichtung kann das automatisierte Entfernen mehrerer Lackier-Schutzfolien besonders zeiteffizient erfolgen.

Das Verfahren kann vorteilhaft weitergebildet werden, indem das im vorangegangenen beschriebene Verfahren durch eine Demaskiervorrichtung durchgeführt wird und die Demaskiervorrichtung oberhalb der Karosserie angeordnet ist. Diese Demaskiervorrichtung kann eine dritte Demaskiervorrichtung sein, sofern bereits eine erste und eine zweite Demaskiervorrichtung an den Seiten einer Karosserie angeordnet sind. Eine Demaskiervorrichtung oberhalb eine Karosserie anzuordnen ist besonders dann vorteilhaft, wenn eine Lackier-Schutzfolie von Teilen des Karosseriedaches, der Motorhaube, der A-Säulen, der Dachholme, der C-Säulen, oder des Kofferraumdeckels. Von diesen Karosserieteilen lässt sich eine Lackier-Schutzfolie besonders einfach von einer Position oberhalb der Karosserie automatisiert entfernen. An den Fahrzeugseiten angeordnete Demaskiervorrichtung sind in solch einem Fall in ihrem Aktionsradius beschränkt, und sie nur in eingeschränktem Maße Bewegungen in der Nähe des Karosseriedachs durchführen können. Es kann vorteilhaft sein mehrere Demaskiervorrichtungen einzusetzen, die das vorgenannte Verfahren durchführen, da die Fahrzeugseiten separat durch eine erste und zweite Lackier-Schutzfolie abgedeckt sein können und die Karosserieoberseite durch eine dritte Lackier-Schutzfolie abgedeckt sein kann. Die Reihenfolge, in der die Demaskiervorrichtungen die Lackier-Schutzfolien von der Karosserie entfernen hängt von der Reihenfolge ab mit der die Lackier-Schutzfolien auf der Karosserie aufgebracht wurden. Diese Abfolge ist stets anwendungsabhängig.

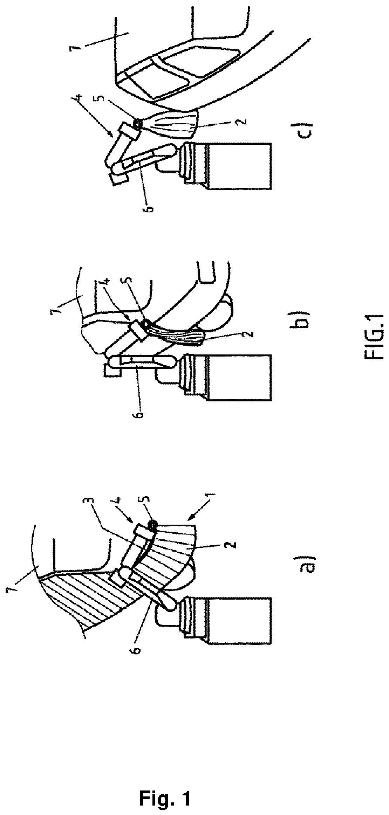

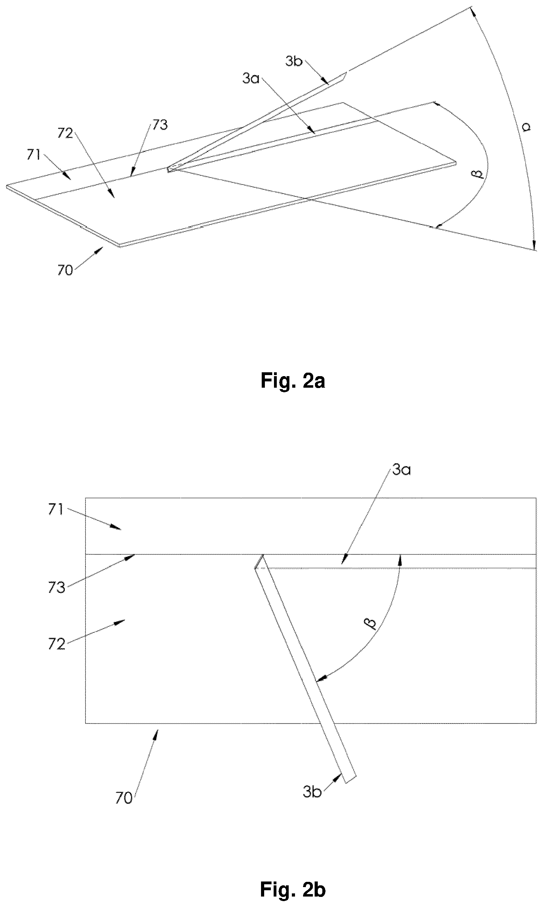

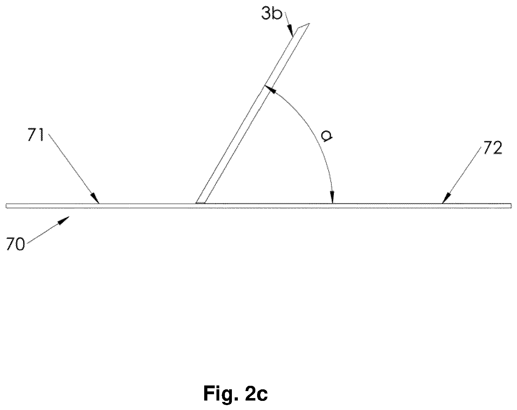

Die Erfindung wird anhand Figuren 1 und 2 beschrieben. Die Figuren stellen exemplarische mögliche Ausführungen dar und sollen nicht beschränkend aufgefasst. Dabei zeigen:
- Fig. 1: Verfahren zum automatisierten Demaskieren einer maskierten Karosserie
- Fig. 2: Darstellung der Abzugswinkel α und β unter denen der Klebestreifen von der Karosserie abgezogen wird.

Die Figur 1 zeigt exemplarisch einen Ablauf des erfindungsgemäßen Verfahrens. In Figur 1 a) ist eine Karosserie 7 dargestellt, wobei im Wesentlichen die Seite der Karosserie 7 mit einer Lackier-Schutzfolie 1 abgedeckt wurde. Dazu wurde die Folie 2 mit einem Klebestreifen 3 an der Oberfläche der Karosserie 7 befestigt. Durch den Klebestreifen wird eine Lackierkante gebildet. Die Lackier-Schutzfolie deckt mehrere Teile der Karosserie ab, nämlich die Front, einen vorderen und einen hinteren Kotflügel, zwei Seitentüren, sowie Teile des Hecks. Somit wurden diese Teile vor einer Lackierung geschützt. Nachdem durch ein Wickelhilfsmittel 5 oder eine Greifhilfsmittel 5 die Verbindung zwischen der Demaskiervorrichtung 4 und der Lackier-Schutzfolie 1 hergestellt wurde, wird die Demaskiervorrichtung durch einen mehrachsigen Industrieroboter 6 entlang der Oberfläche der Karosserie 7 bewegt. Dazu ist die Demaskiervorrichtung 4 an einem mehrachsigen Industrieroboters 7 befestigt. Beginnend von der Front der Karosserie 7 wird die Lackier-Schutzfolie 1 auf ein Wickelhilfsmittel 5 oder Greifhilfsmittel 5 aufgewickelt. In dieser Darstellung kann es sich sowohl um eine Wickelhilfsmittel also auch um ein Greifhilfsmittel handeln, weshalb an dieser Stelle beide Hilfsmittel genannt sind. Dabei wird die Demaskiervorrichtung 4 derart durch den mehrachsigen Industrieroboter bewegt, dass sich das Wickelhilfsmittel 5 oder Greifhilfsmittel 5 stets in einem Abstand von wenigen Zentimetern oberhalb der Oberfläche der Karosserie 7 befindet. Der Roboter 6 folgt im Wesentlichen der Bahn auf der der Klebestreifen 3 der Lackier-Schutzfolie 1 aufgeklebt ist.

In Figur 1 b) zeigt das fortgeführte Verfahren. Die Karosserie 7 wird in der Fertigungsstraße kontinuierlich nach vorne, also in Richtung der Fahrzeugfront, befördert. Dies erfolgt mit einer Geschwindigkeit von ca. 2 m/min. Simultan bewegt der Industrieroboter 6 die Demaskiervorrichtung 4 unter Einhaltung eines Abstands von einigen Zentimetern entlang der Oberfläche der Karosserie 7 und zieht dabei den Klebestreifen 3 der Lackier-Schutzfolie 1 von der Oberfläche der Karosserie 7 ab. Gleichzeitig wird der abgezogene Klebestreifen 3 und die Folie 2 der Lackier-Schutzfolie 1 auf das Wickelhilfsmittel 5 oder Greifhilfsmittel 5 aufgewickelt. Auf dem Wickelhilfsmittel 5 oder Greifhilfsmittel 5 wird somit eine Rolle bestehend aus der Lackier-Schutzfolie gebildet.

Die Bewegung der Karosserie und die Bewegung der Demaskiervorrichtung überlagern sich somit. Die Steuerung des Roboters ist dementsprechend angepasst und sorgt auch dafür, dass die Drehgeschwindigkeit des Wickelhilfsmittel 5 oder Greifhilfsmittel 5 angepasst wird. Die Überlagerung der vorgenannten Bewegungen resultiert in einer relativen Bewegung zwischen Demaskiervorrichtung und der Oberfläche der Karosserie.

In Figur 1 c) zeigt, dass die Karosserie 7 die den Roboter 6 und die Demaskiervorrichtung passiert hat und die Lackier-Schutzfolie automatisiert von der Karosserie entfernt wurde. Die Lackier-Schutzfolie 1 ist samt Folie 2 und Klebestreifen 3 in Form einer Rolle auf das Wickelhilfsmittel 5 oder Greifhilfsmittel 5 aufgewickelt. Die Rolle kann als Ganzes von der Demaskiervorrichtung zu einer Abfallpresse bewegt werden und automatisiert abgeworfen werden und entsorgt werden (nicht dargestellt).

Die Figur 2 zeigt eine detaillierte Darstellung der Abzugswinkel α und β, unter denen der wenigstens eine Klebestreifen 3, 3a, 3b einer Lackier-Schutzfolie bzw. mit dem eine Folie auf einer einfach lackierten Oberfläche der Karosserie 70, 72 aufgeklebt ist, abgezogen wird. Der einfach lackierte Bereich 72 und der doppelt lackierte Bereich 71 grenzen aneinander an und bilden die Lackierkante 73.

Die Figur 2 a) zeigt eine dreidimensionale Darstellung des auf der Oberfläche einer Karosserie aufgeklebten Klebestreifens 3 einer Lackier-Schutzfolie 1. Die Folie 2 ist aus Gründen der Übersichtlichkeit nicht dargestellt. Die Figur 2 b) stellt eine Draufsicht dar, die Figur 2 c) ist eine Seitenansicht der Figur 2 a).

Der Winkel α wird eingeschlossen die Oberfläche der Karosserie 70, 72 und dem von der Karosserie abgezogenen Teil des Klebestreifens 3b.

Der Winkel β wird eingeschlossen durch den Teil des Klebestreifen 3a, der auf der Oberfläche der Karosserie aufgeklebt ist und der Projektion auf die Oberfläche der Karosserie 70, 72 des Teils des Klebestreifens 3b, der von der Oberfläche der Karosserie 70, 72 abgelöst ist.

### Bezugszeichenliste

- 1: Lackier-Schutzfolie
- 2: Folie
- 3: Klebestreifen
- 3a: Teil des Klebestreifens, der auf Karosserie klebt
- 3b: Teil des Klebestreifens, der von der Karosserie abgezogen wurde
- 4: Demaskiervorrichtung
- 5: Wickelhilfsmittel / Greifhilfsmittel
- 6: mehrachsiger Industrieroboter
- 7: Karosserie
- 70: Teil einer Karosserie
- 71: doppelt lackierte Oberfläche der Karosserie
- 72: einfach lackierte Oberfläche der Karosserie
- 73: Lackkante

## Patentansprüche

1. Verfahren zum automatisierten Entfernen einer Lackier-Schutzfolie (1) von mindestens einem Teil einer Oberfläche (70, 71, 72) einer Karosserie (7), wobei die Lackier-Schutzfolie (1) mittels wenigstens einem Klebestreifen (3) auf wenigstens einen Teil der Oberfläche (70, 71, 72) der Karosserie (7) lösbar aufgeklebt ist, umfassend die Schritte:
a. Verbinden eines Teils der Lackier-Schutzfolie (1) und/oder des wenigstens einen Klebestreifens (3) mit einer Demaskiervorrichtung (4),
b. Bewegen von Demaskiervorrichtung (4) und Karosserie (7) relativ zueinander entlang eines Verfahrweges, sodass eine Zugkraft auf die Lackier-Schutzfolie (1) und/oder den wenigstens einen Klebestreifen (3) ausgeübt wird, wodurch der wenigstens eine Klebestreifen (3) von der Karosserie (7) abgezogen wird, und
c. Fortgeführtes relatives Bewegen von Demaskiervorrichtung (4) und Karosserie (7) zueinander, bis der wenigstens eine Klebestreifen (3) vollständig von der Karosserie (7) abgezogen ist.

2. Verfahren nach Anspruch 1, wobei in Schritt b) die Lackier-Schutzfolie (1) und/oder der wenigstens eine Klebestreifen (3) durch die Demaskiervorrichtung (4) aufgewickelt wird, und die Demaskiervorrichtung (4) dazu ausgebildet ist, die Lackier-Schutzfolie (1) und/oder den wenigstens einen Klebestreifen (3) aufzuwickeln, sodass die Lackier-Schutzfolie (1) und/oder der wenigstens eine Klebestreifen (3) eine Rolle bilden.

3. Verfahren nach Anspruch 2, wobei in Schritt a) die Lackier-Schutzfolie (1) und/oder der wenigstens eine Klebestreifen (3) mit einem Wickelhilfsmittel (5) verbunden wird und das Wickelhilfsmittel (5) mit der Demaskiervorrichtung (4) in Verbindung steht oder mit der Demaskiervorrichtung (4) lösbar verbunden wird.

4. Verfahren nach Anspruch 1 oder 2, wobei in Schritt a) die Lackier-Schutzfolie (1) und/oder der wenigstens eine Klebestreifen (3) mit einem Greifhilfsmittel (5) verbunden werden, und das Greifhilfsmittel (5) lösbar mit der Demaskiervorrichtung (4) verbunden wird.

5. Verfahren nach einem der Ansprüche 3 oder 4, wobei während des Bewegens von Demaskiervorrichtung (4) und Karosserie (7) relativ zueinander entlang eines Verfahrweges das Wickelhilfsmittel (5) oder das Greifhilfsmittel (5) derart durch die Demaskiervorrichtung (4) rotiert wird, dass diejenige Seite der Lackier-Schutzfolie (1), die der Karosserie (7) zugewandt ist, nach dem Aufwickeln auf das Wickelhilfsmittel (5) oder dem Greifhilfsmittel (5) eine Außenseite der Rolle bildet.

6. Verfahren nach einem der vorhergehenden Ansprüche, wobei in einem weiteren Schritt die Lackier-Schutzfolie (1) und/oder der wenigstens eine Klebestreifens (3) einer oder die Lackier-Schutzfolie (1) und/oder der wenigstens eine Klebestreifens (3) einschließlich dem Wickelhilfsmittel (5) oder dem Greifhilfsmittel (5) einer Entsorgungseinrichtung zugeführt werden.

7. Verfahren nach einem der vorhergehenden Ansprüche, wobei die Zugkraft, die auf die Lackier-Schutzfolie (1) und/oder den wenigstens einen Klebestreifen (3) ausgeübt wird zwischen 1 N/cm und 12 N/cm beträgt, wobei die Zugkraft durch eine Rotationsbewegung des Wickelhilfsmittels (5) oder des Greifhilfsmittels (5) erzeugt wird, und/oder durch die relative Bewegung der Demaskiervorrichtung (4) und der Karosserie (7) zueinander erzeugt wird.

8. Verfahren nach einem der vorhergehenden Ansprüche, wobei eine Geschwindigkeit, mit der der wenigstens eine Klebestreifen (3) von der Oberfläche der Karosserie (7, 70, 72) abgezogen wird, zwischen 1 m/min bis 30 m/min beträgt.

9. Verfahren nach einem der vorhergehenden Ansprüche, wobei eine Relativgeschwindigkeit, mit der die Demaskiervorrichtung (4) und die Karosserie (7) relativ zueinander entlang eines Verfahrweges bewegt werden, zwischen 1 m/min und 5 m/min beträgt, besonders bevorzugt 1,5 m/min bis 3 m/min beträgt.

10. Verfahren nach einem der vorhergehenden Ansprüche, wobei der wenigstens eine Klebestreifen (3, 3a, 3b) unter einem Winkel α von 1° bis 179° von der Karosserie (7, 70, 72) abgezogen wird, besonders bevorzugt unter einem Winkel zwischen 1° und 90° von der Karosserie (7, 70, 72) abgezogen wird, wobei der Winkel α zwischen der Oberfläche der Karosserie (7, 70, 72) und dem von der Karosserie (7) abgezogenen Teil des Klebestreifens (3b) eingeschlossen wird.

11. Verfahren nach einem der vorhergehenden Ansprüche, wobei der wenigstens eine Klebestreifen (3, 3a, 3b) unter einem Winkel β von 1° bis 179° von der Karosserie (7, 70, 72) abgezogen wird, besonders bevorzugt unter einem Winkel β zwischen 30° und 45° von der Karosserie (7) abgezogen wird, wobei der Winkel β durch den Teil des Klebestreifen (3a), der auf der Oberfläche der Karosserie (7, 70, 72) aufgeklebt ist und der Projektion des Teils des Klebestreifens (3b), der von der Oberfläche der Karosserie (7, 70, 72) abgelöst ist auf die Oberfläche der Karosserie (7, 70, 72), eingeschlossen wird.

12. Verfahren nach einem der vorhergehenden Ansprüche, wobei das Verfahren der Ansprüche 1 bis 11 jeweils mittels einer ersten Demaskiervorrichtung und mittels einer zweiten Demaskiervorrichtung durchgeführt wird, wobei die erste Demaskiervorrichtung an einer ersten Seite der Karosserie (links) angeordnet ist und die zweite Demaskiervorrichtung auf einer zweiten Seite der Karosserie (7) (rechts) angeordnet ist.

13. Verfahren nach einem der vorhergehenden Ansprüche, wobei das Verfahren der Ansprüche 1 bis 11 durch eine dritte Demaskiervorrichtung durchgeführt wird und die dritte Demaskiervorrichtung oberhalb der Karosserie (7) angeordnet ist.
